# EUROPEAN PATENT SPECIFICATION

(11) **EP 4 166 448 B1**
(45) Date of publication and mention of the grant of the patent: **23.07.2025**
(21) Application number: 21203107.4
(22) Date of filing: 18.10.2021
(51) Int. Cl.: B63H 23/32, F16J 15/324

(54) **ARRANGEMENT AND METHOD FOR SEALING A PROPELLER SHAFT OF A MARINE VESSEL**
ANORDNUNG UND VERFAHREN ZUR ABDICHTUNG EINER PROPELLERWELLE EINES SCHIFFES
AGENCEMENT ET PROCÉDÉ D'ÉTANCHÉIFICATION D'UN ARBRE D'HÉLICE D'UN NAVIRE

(43) Date of publication of application: 19.04.2023
(73) Proprietor: ABB Oy, 00380 Helsinki (FI)
(72) Inventor: TURUNEN, Ari, 00980 Helsinki (FI); KOPSA, Antti, 02230 Espoo (FI); OLLIKAINEN, Aulis, 04600 Mäntsälä (FI)
(74) Representative: Boco IP Oy Ab

(56) References cited:
- EP-A1- 3 425 243

## Description

### Field of the invention

The invention relates to an arrangement for sealing a propeller shaft of a marine vessel wherein the arrangement comprising a propeller shaft rotatable supported with at least one bearing a bearing arrangement adjacent to said at least one bearing, a first lubrication arrangement comprising a first lubricant circulation line for conducting first lubricant to said bearing arrangement and for conducting first lubricant from said bearing arrangement, and a first lubricant circulator configured to create a flow of first lubricant in the first lubricant circulation line and in said bearing arrangement, a shaft seal arrangement for sealing the propeller shaft against sea water, and a second lubrication arrangement comprising a second lubricant circulation line for conducting second lubricant to said shaft seal arrangement and for conducting second lubricant from said shaft seal arrangement, and a second lubricant circulator configured to create a flow of second lubricant in the second lubricant circulation line and in said shaft seal arrangement.

The invention also relates to a method for sealing a propeller shaft of a marine vessel with a seal arrangement comprising at least one bearing for rotatable supporting the propeller shaft, a bearing arrangement adjacent to said at least one bearing, a first lubrication arrangement comprising a first lubricant circulation line for conducting first lubricant to said bearing arrangement and for conducting first lubricant from said bearing arrangement, a first lubricant circulator configured to create a flow of first lubricant in the first lubricant circulation line and in said bearing arrangement, a shaft seal arrangement for sealing the propeller shaft against sea water, and a second lubrication arrangement comprising a second lubricant circulation line for conducting second lubricant to said shaft seal arrangement and for conducting second lubricant from said shaft seal arrangement, a second lubricant circulator configured to create a flow of second lubricant in the second lubricant circulation line and in said shaft seal arrangement.

Publication WO 2016/071565 presents a method according to the preamble of independent claim 1 and an arrangement according to the preamble of independent claim 13.

Raising of the temperature of the lubricant in the shaft seal arrangement both consumes lubricant that is used in the shaft seal arrangement and results in wear of the shaft seal arrangement.

For prior art reference is also made to EP 3 425 243.

### Objective of the invention

The object of the invention is to provide a method and an arrangement that lowers the temperature of the temperature of the lubricant in the shaft seal arrangement and that consequently lowers the consumption of lubricant that is used in the shaft seal arrangement and that consequently lowers the wear of the shaft seal arrangement.

### Short description of the invention

The arrangement of the invention is characterized by the definitions of independent claim 1.

Preferred embodiments of the arrangement are defined in the dependent claims 2 to 12.

The method of the invention is correspondingly characterized by the definitions of independent claim 13.

Preferred embodiments of the method are defined in the dependent claims 14 to 18.

### List of figures

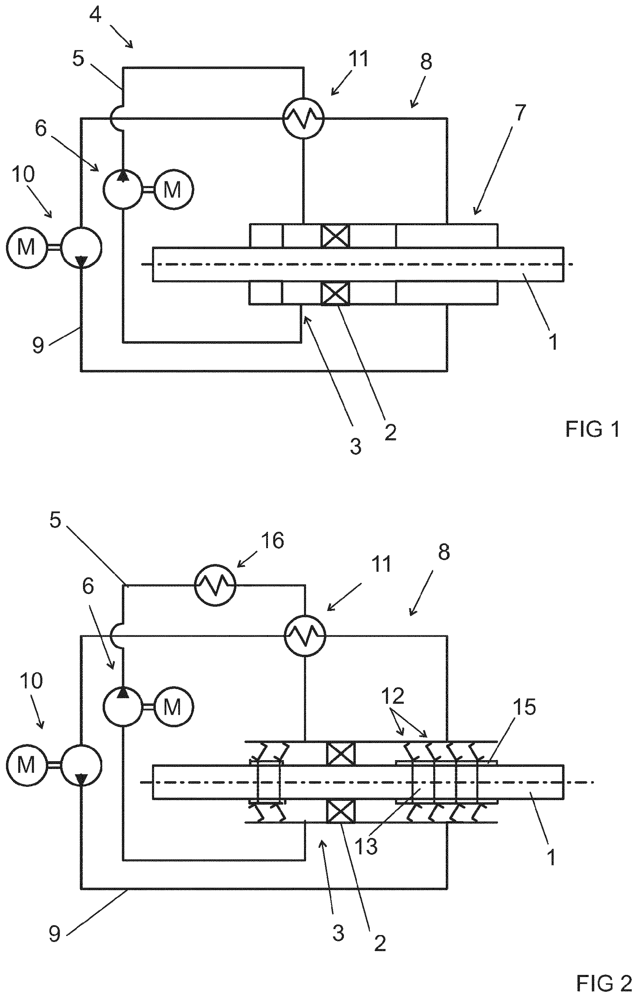

In the following the invention will described in more detail by referring to the figures, of which
Figure 1 illustrates an embodiment of the arrangement for sealing a propeller shaft,
Figure 2 illustrates another embodiment of the arrangement for sealing a propeller shaft,
Figure 3 illustrates yet another embodiment of the arrangement for sealing a propeller shaft, and
Figure 4 illustrates still embodiment of the arrangement for sealing a propeller shaft.

### Detailed description of the invention

First the arrangement for sealing a propeller shaft 1 of a marine vessel (not illustrated in the figures) and some embodiments and variants will be described in greater detail.

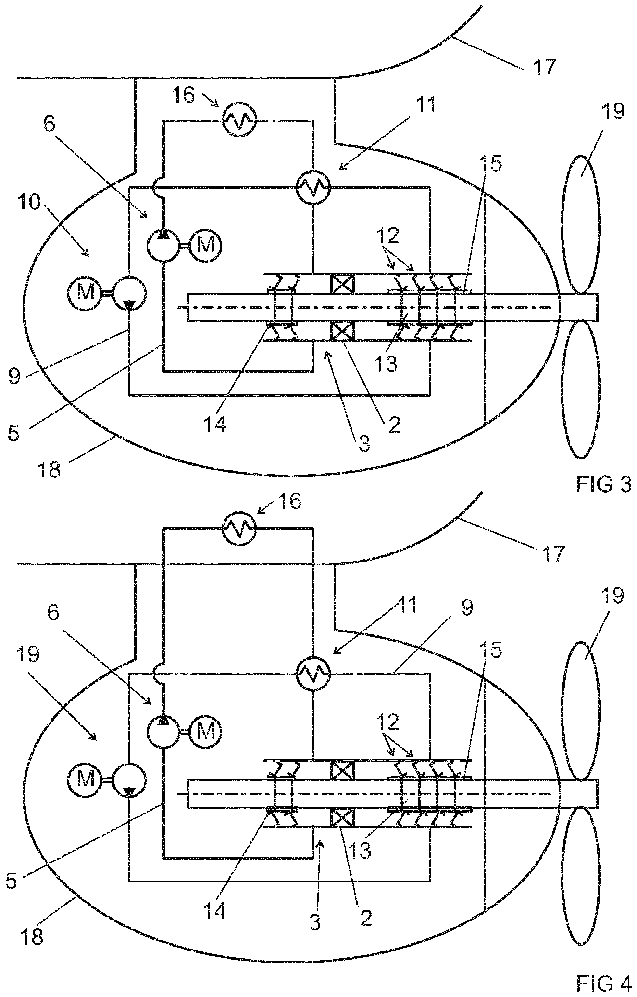

The propeller shaft 1 can be arranged at a hull 17 of a marine vessel such as at a ship or at a propulsion unit18 such as at an azimuthing podded propulsor that is arranged at a hull 17 of a marine vessel such as at a ship, as illustrated in figures 3 and 4.

If the propeller shaft 1 is arranged at a hull 17 of a marine vessel, the propeller shaft has a first portion (not illustrated) that penetrates out of the hull 17 of the marine vessel into sea water when the marine vessel floats in sea water and to which first portion at least one propeller 19 is attached and a second portion (not illustrated) that is within the hull 17 of the marine vessel and to which second portion a drive means for rotating the propeller shaft 1 is functionally connected.

If the propeller shaft 1 is arranged at a propulsion unit 18 that is arranged hull 17 of a marine vessel, the propeller shaft has a first portion that penetrates out of a shell structure of the propulsion unit 18 into sea water when the marine vessel floats in sea water and to which first portion at least one propeller 19 is attached and a second portion that is within the shell structure of the propulsion unit 18 and to which second portion a drive means for rotating the propeller shaft 1 is functionally connected.

The propeller shaft 1 is rotatable supported with at least one bearing 2.

The arrangement comprises a bearing arrangement 3 adjacent to said at least one bearing 2. The bearing arrangement 3 can comprises a bearing housing (not marked with a reference number) encapsulating said at least one bearing 2.

The arrangement comprises a first lubrication arrangement 4 comprising a first lubricant circulation line 5 for conducting first lubricant (not illustrated in the figures) to said bearing arrangement 3 and for conducting first lubricant from said bearing arrangement 3, and a first lubricant circulator 6 configured to create a flow of first lubricant in the first lubricant circulation line and in said bearing arrangement 3. If the bearing 3 arrangement comprises a bearing housing 2 encapsulating said at least one bearing 2, the first lubricant circulation line 5 for conducting first lubricant to said bearing arrangement 3 and for conducting first lubricant from said bearing arrangement can be configured to conduct first lubricant into said bearing housing and be configured to conduct first lubricant from said bearing housing and the first lubricant circulator 6 configured to create a flow of first lubricant in the first lubricant circulation line and in said bearing arrangement 3 can be configured to create a flow of lubricant in said bearing housing.

The arrangement comprises a shaft seal arrangement 7 for sealing the propeller shaft 1 against sea water.

The arrangement comprises a second lubrication arrangement 8 comprising a second lubricant circulation line 9 for conducting second lubricant (not illustrated in the figures) to said shaft seal arrangement 7 and for conducting second lubricant from said shaft seal arrangement 7, and a second lubricant circulator 10 configured to create a flow of second lubricant in the second lubricant circulation line 9 and in said shaft seal arrangement 7.

The arrangement comprises a first heat exchanger 11 in thermal contact with the first lubricant circulation line 5 and in thermal contact with the second lubricant circulation line 9 for transferring thermal energy between first lubricant flowing in the first lubricant circulation line 5 and second lubricant flowing in the second lubricant circulation line 9.

In some embodiments and variants of the arrangement, the first lubricant circulator 6 is a first pump.

The outer circumference of the propeller shaft 1 can have a first liner 14 at the bearing arrangement 3.

The shaft seal arrangement 7 can in some embodiments and variants of the arrangement comprise a plurality a plurality of seal rings 12 axially spaced apart from each other and engaging the outer circumference of the propeller shaft 1 such that at least one lubricant seal chamber 13 is delimited between adjacent seal rings 12 and the outer circumference of the propeller shaft 1. In such embodiments and variants of the arrangement, the second lubricant circulation line 9 for conducting second lubricant to said shaft seal arrangement 7 and for conducting second lubricant from said shaft seal arrangement 7 is configured to conduct second lubricant to said at least one lubricant seal chamber 13 and is configured to conduct second lubricant from said at least one lubricant seal chamber 13. In such embodiments and variants of the arrangement, the second lubricant circulator 10 configured to create a flow of second lubricant in the second lubricant circulation line 9 and in said shaft seal arrangement 7 is configured to create a flow of second lubricant in the second lubricant circulation line 9 and in said at least one lubricant seal chamber 13. In such embodiments and variants of the arrangement, at least one of the seal rings 12 can comprise second seal lips.

In some embodiments and variants of the arrangement, the second lubricant circulator 10 is a second pump.

The outer circumference of the propeller shaft 1 can have a second liner 15 at the shaft seal arrangement 7.

First lubricant flowing in the first lubricant circulation line 5 is preferably, but not necessarily, prevented from mixing with second lubricant flowing in the second lubricant circulation line 9 in the first heat exchanger 11.

This allows to use as the first lubricant a lubricant that has a composition that is different from the composition of the second lubricant.

First lubricant flowing in the first lubricant circulation line 5 is preferably, but not necessarily, prevented from flowing into the second lubricant circulation line 9 in the first heat exchanger 11.

This allows to use as the first lubricant a lubricant that has a composition that is different from the composition of the second lubricant.

Second lubricant flowing in the second lubricant circulation line 9 is preferably, but not necessarily, prevented from flowing into the first lubricant circulation line 5 in the first heat exchanger 11.

This allows to use as the first lubricant a lubricant that has a composition that is different from the composition of the second lubricant. The purity requirement for the first lubricant for the bearing 2 is for example higher than the purity requirement for the second lubricant for the shaft seal arrangement 7.

The first lubricant is preferably a lubricant that has a composition that is different from the composition of the second lubricant. The purity requirement for the first lubricant for the bearing 2 is for example higher than the purity requirement for the second lubricant for the shaft seal arrangement 7. The viscosity of the second lubricant that is used in the shaft seal arrangement 7 is also normally higher than the viscosity of the first lubricant that is used in the bearing 2.

The arrangement can comprise a second heat exchanger 16 in thermal contact with the first lubricant circulation line 5, wherein the second heat exchanger is configured to transfer thermal energy from first lubricant circulating in the first lubricant circulation line 5 and wherein the second heat exchanger 16 is provided from the first lubricant circulation line 5. If the propeller shaft 1 is arranged at a propulsion unit 18 such as at an azimuthing podded propulsor that is arranged at a hull 17 of a marine vessel such as at a ship, the second heat exchanger 16 is preferably, but not necessarily, arranged within hull 17 of the ship, outside the propulsion unit 18, as illustrated in figure 4. This allows to use a large heat exchanger as the second heat exchanger 16, because there is normally more space within the hull 17 of the ship than in the propulsion unit 18. It is however possible to arrange the second heat exchanger 16 within the propulsion unit 18 as illustrated in figure 3.

Next method for sealing a propeller shaft 1 of a marine vessel with a seal arrangement and some embodiments and variants of the method will be described in greater detail.

The propeller shaft 1 can be arranged at a hull 17 of a marine vessel such as at a ship or at a propulsion unit 18 such as at an azimuthing podded propulsor that is arranged at a hull 17 of a marine vessel such as at a ship, as illustrated in figures 3 and 4.

If the propeller shaft 1 is arranged at a hull 17 of a marine vessel, the propeller shaft has a first portion (not illustrated) that penetrates out of the hull 17 of the marine vessel into sea water when the marine vessel floats in sea water and to which first portion at least one propeller 19 is attached and a second portion (not illustrated) that is within the hull 17 of the marine vessel and to which second portion a drive means for rotating the propeller shaft 1 is functionally connected.

If the propeller shaft 1 is arranged at a propulsion unit 18 that is arranged hull 17 of a marine vessel, the propeller shaft has a first portion that penetrates out of a shell structure of the propulsion unit 18 into sea water when the marine vessel floats in sea water and to which first portion at least one propeller 19 is attached and a second portion that is within the shell structure of the propulsion unit 18 and to which second portion a drive means for rotating the propeller shaft 1 is functionally connected.

In the method the propeller shaft 1 rotatable is supported with at least one bearing 2.

In the method the propeller shaft 1 of the marine vessel is sealed with a seal arrangement comprising a bearing arrangement 3 adjacent to said at least one bearing 2.

In the method the propeller shaft 1 of the marine vessel is sealed with a seal arrangement comprising a first lubrication arrangement 4 comprising a first lubricant circulation line 5 for conducting first lubricant to said bearing arrangement 3 and for conducting first lubricant from said bearing arrangement 3, a first lubricant circulator 6 configured to create a flow of first lubricant in the first lubricant circulation line and in said bearing arrangement 3.

If the bearing 3 arrangement comprises a bearing housing 2 encapsulating said at least one bearing 2, the first lubricant circulation line 5 for conducting first lubricant to said bearing arrangement 3 and for conducting first lubricant from said bearing arrangement can be configured to conduct first lubricant into said bearing housing and be configured to conduct first lubricant from said bearing housing and the first lubricant circulator 6 configured to create a flow of first lubricant in the first lubricant circulation line and in said bearing arrangement 3 can be configured to create a flow of lubricant in said bearing housing.

In the method the propeller shaft 1 of the marine vessel is sealed with a seal arrangement comprising a shaft seal arrangement 7 for sealing the propeller shaft 1 against sea water.

In the method the propeller shaft 1 of the marine vessel is sealed with a seal arrangement comprising a second lubrication arrangement 8 comprising a second lubricant circulation line 9 for conducting second lubricant to said shaft seal arrangement 7 and for conducting second lubricant from said shaft seal arrangement 7, a second lubricant circulator 10 configured to create a flow of second lubricant in the second lubricant circulation line 9 and in said shaft seal arrangement 7.

The method comprises providing a first heat exchanger 11 in thermal contact with the first lubricant circulation line 5 and in thermal contact with the second lubricant circulation line 9.

The method comprises transferring thermal energy between first lubricant flowing in the first lubricant circulation line 5 and second lubricant flowing in the second lubricant circulation line 9 by means of the first heat exchanger 11.

This allows to use as the first lubricant a lubricant that has a composition that is different from the composition of the second lubricant. The purity requirement for the first lubricant for the bearing 2 is for example higher than the purity requirement for the second lubricant for the shaft seal arrangement 7. The viscosity of the second lubricant that is used in the shaft seal arrangement 7 is also normally higher than the viscosity of the first lubricant that is used in the bearing 2.

The method comprises preferably, but not necessarily, preventing first lubricant flowing in the first lubricant circulation line 5 from mixing with second lubricant flowing in the second lubricant circulation line 9 in the first heat exchanger 11.

This allows to use as the first lubricant a lubricant that has a composition that is different from the composition of the second lubricant.

The method comprises preferably, but not necessarily, preventing first lubricant flowing in the first lubricant circulation line 5 from flowing into the second lubricant circulation line 9 in the first heat exchanger 11.

This allows to use as the first lubricant a lubricant that has a composition that is different from the composition of the second lubricant.

The method comprises preferably, but not necessarily, preventing second lubricant flowing in the second lubricant circulation line 9 from flowing into the first lubricant circulation line 5 in the first heat exchanger 11.

The method comprises preferably, but not necessarily, using as the first lubricant a lubricant that has a composition that is different from the composition of the second lubricant.

The method comprises preferably, but not necessarily, providing a second heat exchanger 16 in thermal contact with the first lubricant circulation line 5 so that the second heat exchanger 16 is provided from the first lubricant circulation line 5, and transferring thermal energy from first lubricant circulating in the first lubricant circulation line 5 by means of the second heat exchanger 16. If the propeller shaft 1 is arranged at a propulsion unit 18 such as at an azimuthing podded propulsor that is arranged at a hull 17 of a marine vessel such as at a ship, the second heat exchanger 16 is preferably, but not necessarily, arranged within the hull 17 of the ship, outside the propulsion unit 18. as illustrated in figure 4. This allows to use a large heat exchanger as the second heat exchanger 16, because there is normally more space within the hull 18 of the ship than in the propulsion unit 18.It is however possible to arrange the second heat exchanger 16 within the propulsion unit 18 as illustrated in figure 3. It is apparent to a person skilled in the art that as technology advanced, the basic idea of the invention can be implemented in various ways. The invention and its embodiments are therefore not restricted to the above examples, but they may vary within the scope of the claims.

## Claims

1. An arrangement for sealing a propeller shaft (1) of a marine vessel, the arrangement comprising
a propeller shaft (1) rotatably supported with at least one bearing (2),
a bearing arrangement (3) adjacent to said at least one bearing (2),
a first lubrication arrangement (4) comprising a first lubricant circulation line (5) for conducting first lubricant to said bearing arrangement (3) and for conducting first lubricant from said bearing arrangement (3), and a first lubricant circulator (6) configured to create a flow of first lubricant in the first lubricant circulation line and in said bearing arrangement (3),
a shaft seal arrangement (7) for sealing the propeller shaft (1) against sea water, and
a second lubrication arrangement (8) comprising a second lubricant circulation line (9) for conducting second lubricant to said shaft seal arrangement (7) and for conducting second lubricant from said shaft seal arrangement (7), and a second lubricant circulator (10) configured to create a flow of second lubricant in the second lubricant circulation line (9) and in said shaft seal arrangement (7),
**characterized**
**by** a first heat exchanger (11) in thermal contact with the first lubricant circulation line (5) and in thermal contact with the second lubricant circulation line (9) for transferring thermal energy between first lubricant flowing in the first lubricant circulation line (5) and second lubricant flowing in the second lubricant circulation line (9).

2. The arrangement according to claim 1, **characterized**
**by** the first lubricant circulator (6) being a first pump.

3. The arrangement according to claims 1 or 2, **characterized**
**by** the outer circumference of the propeller shaft (1) having a first liner (14) at the bearing arrangement (3).

4. The arrangement according to any of the claims 1 to 3, **characterized**
**by** the shaft seal arrangement (7) comprising a plurality of seal rings (12) axially spaced apart from each other and engaging the outer circumference of the propeller shaft (1) such that at least one lubricant seal chamber (13) is delimited between adjacent seal rings (12) and the outer circumference of the propeller shaft (1),
by the second lubricant circulation line (9) for conducting second lubricant to said shaft seal arrangement (7) and for conducting second lubricant from said shaft seal arrangement (7) being configured to conduct second lubricant to said at least one lubricant seal chamber (13) and being configured to conduct second lubricant from said at least one lubricant seal chamber (13), and
by the second lubricant circulator (10) configured to create a flow of second lubricant in the second lubricant circulation line (9) and in said shaft seal arrangement (7) being configured to create a flow of second lubricant in the second lubricant circulation line (9) and in said at least one lubricant seal chamber (13).

5. The arrangement according to claim 4, **characterized**
**by** at least one of the seal rings (12) comprising second seal lips.

6. The arrangement according to any of the claims 1 to 5, **characterized**
**by** the second lubricant circulator (10) being a second pump.

7. The arrangement according to any of the claims 1 to 6, **characterized**
**by** the outer circumference of the propeller shaft (1) having a second liner (15) at the shaft seal arrangement (7).

8. The arrangement according to any of the claims 1 to 7, **characterized**
**by** first lubricant flowing in the first lubricant circulation line (5) being prevented from mixing with second lubricant flowing in the second lubricant circulation line (9) in the first heat exchanger (11).

9. The arrangement according to any of the claims 1 to 8, **characterized**
**by** first lubricant flowing in the first lubricant circulation line (5) being prevented from flowing into the second lubricant circulation line (9) in the first heat exchanger (11).

10. The arrangement according to any of the claims 1 to 9, **characterized**
**by** second lubricant flowing in the second lubricant circulation line (9) being prevented from flowing into the first lubricant circulation line (5) in the first heat exchanger (11).

11. The arrangement according to any of the claims 1 to 10, **characterized**
**by** the first lubricant being a lubricant that has a composition that is different from the composition of the second lubricant.

12. The arrangement according to any of the claims 1 to 11, **characterized**
**by** a second heat exchanger (16) in thermal contact with the first lubricant circulation line (5), wherein the second heat exchanger (16) is configured to transfer thermal energy from first lubricant circulating in the first lubricant circulation line (5), wherein the second heat exchanger (16) is provided from the first lubricant circulation line (5).

13. A method for sealing a propeller shaft (1) of a marine vessel with a seal arrangement comprising
at least one bearing (2) for rotatably supporting the propeller shaft (1),
a bearing arrangement (3) adjacent to said at least one bearing (2),
a first lubrication arrangement (4) comprising a first lubricant circulation line (5) for conducting first lubricant to said bearing arrangement (3) and for conducting first lubricant from said bearing arrangement (3), a first lubricant circulator (6) configured to create a flow of first lubricant in the first lubricant circulation line and in said bearing arrangement (3),
a shaft seal arrangement (7) for sealing the propeller shaft (1) against sea water, and
a second lubrication arrangement (8) comprising a second lubricant circulation line (9) for conducting second lubricant to said shaft seal arrangement (7) and for conducting second lubricant from said shaft seal arrangement (7), a second lubricant circulator (10) configured to create a flow of second lubricant in the second lubricant circulation line (9) and in said shaft seal arrangement (7),
**characterized**
**by** providing a first heat exchanger (11) in thermal contact with the first lubricant circulation line (5) and in thermal contact with the second lubricant circulation line (9), and
by transferring thermal energy between first lubricant flowing in the first lubricant circulation line (5) and second lubricant flowing in the second lubricant circulation line (9) by means of the first heat exchanger (11).

14. The method according to claim 13, **characterized**
**by** preventing first lubricant flowing in the first lubricant circulation line (5) from mixing with second lubricant flowing in the second lubricant circulation line (9) in the first heat exchanger (11).

15. The method according to claim 13 or 14, **characterized**
**by** preventing first lubricant flowing in the first lubricant circulation line (5) from flowing into the second lubricant circulation line (9) in the first heat exchanger (11).

16. The method according to any of the claims 13 to 15, **characterized**
**by** preventing second lubricant flowing in the second lubricant circulation line (9) from flowing into the first lubricant circulation line (5) in the first heat exchanger (11).

17. The method according to any of the claims 13 to 16, **characterized**
**by** using as the first lubricant a lubricant that has a composition that is different from the composition of the second lubricant.

18. The method according to any of the claims 13 to 17, **characterized**
**by** providing a second heat exchanger (16) in thermal contact with the first lubricant circulation line (5) wherein the second heat exchanger (16) is provided from the first lubricant circulation line (5), and
by transferring thermal energy from first lubricant circulating in the first lubricant circulation line (5) by means of the second heat exchanger (16).

## Patentansprüche

1. Anordnung zum Abdichten einer Propellerwelle (1) eines Wasserfahrzeugs, wobei die Anordnung umfasst:
eine mit mindestens einem Lager (2) drehbar gelagerte Propellerwelle (1),
eine an das mindestens eine Lager (2) angrenzende Lageranordnung (3),
eine erste Schmieranordnung (4) umfassend eine erste Schmiermittelumwälzleitung (5) zum Führen eines ersten Schmiermittels hin zur Lageranordnung (3) und zum Führen des ersten Schmiermittels weg von der Lageranordnung (3), und eine erste Schmiermittelumwälzvorrichtung (6), die dazu ausgelegt ist, einen Strom von erstem Schmiermittel in der ersten Schmiermittelumwälzleitung und in der Lageranordnung (3) zu erzeugen,
eine Wellendichtungsanordnung (7) zum Abdichten der Propellerwelle (1) gegen Meerwasser, und
eine zweite Schmieranordnung (8) umfassend eine zweite Schmiermittelumwälzleitung (9) zum Führen eines zweiten Schmiermittels hin zur Wellendichtungsanordnung (7) und zum Führen des zweiten Schmiermittels weg von der Wellendichtungsanordnung (7), und eine zweite Schmiermittelumwälzvorrichtung (10), die dazu ausgelegt ist, einen Strom von zweitem Schmiermittel in der zweiten Schmiermittelumwälzleitung (9) und in der Wellendichtungsanordnung (7) zu erzeugen,
**gekennzeichnet**
**durch** einen ersten Wärmetauscher (11) in thermischem Kontakt mit der ersten Schmiermittelumwälzleitung (5) und in thermischem Kontakt mit der zweiten Schmiermittelumwälzleitung (9) zur Übertragung von thermische Energie zwischen dem in der ersten Schmiermittelumwälzleitung (5) strömenden ersten Schmiermittel und dem in der zweiten Schmiermittelumwälzleitung (9) strömenden zweiten Schmiermittel.

2. Anordnung nach Anspruch 1, **gekennzeichnet**
**dadurch, dass** die erste Schmiermittelumwälzvorrichtung (6) eine erste Pumpe ist.

3. Anordnung nach Anspruch 1 oder 2, **gekennzeichnet**
**dadurch, dass** der Außenumfang der Propellerwelle (1) eine erste Laufbuchse (14) an der Lageranordnung (3) aufweist.

4. Anordnung nach einem der Ansprüche 1 bis 3, **gekennzeichnet**
**dadurch, dass** die Wellendichtungsanordnung (7) eine Mehrzahl von Dichtungsringen (12) umfasst, die axial zueinander beabstandet sind und in den Außenumfang der Propellerwelle (1) eingreifen, so dass mindestens eine Schmiermitteldichtungskammer (13) zwischen angrenzenden Dichtungsringen (12) und dem Außenumfang der Propellerwelle (1) abgegrenzt ist,
dadurch, dass die zweite Schmiermittelumwälzleitung (9) zum Führen des zweiten Schmiermittels hin zur Wellendichtungsanordnung (7) und zum Führen des zweiten Schmiermittels weg von der Wellendichtungsanordnung (7) dazu ausgelegt ist, das zweite Schmiermittel zu der mindestens einen Schmiermitteldichtungskammer (13) hin zu führen, und dazu ausgelegt ist, das zweite Schmiermittel von der mindestens einen Schmiermitteldichtungskammer (13) weg zu führen, und
dadurch, dass die zweite Schmiermittelumwälzvorrichtung (10), die dazu ausgelegt ist, einen Strom von zweitem Schmiermittel in der zweiten Schmiermittelumwälzleitung (9) und in der Wellendichtungsanordnung (7) zu erzeugen, dazu ausgelegt ist, einen Strom von zweitem Schmiermittel in der zweiten Schmiermittelumwälzleitung (9) und in der mindestens einen Schmiermitteldichtungskammer (13) zu erzeugen.

5. Anordnung nach Anspruch 4, **gekennzeichnet**
**dadurch, dass** mindestens einer der Dichtungsringe (12) zweite Dichtlippen umfasst.

6. Anordnung nach einem der Ansprüche 1 bis 5, **gekennzeichnet**
**dadurch, dass** die zweite Schmiermittelumwälzvorrichtung (10) eine zweite Pumpe ist.

7. Anordnung nach einem der Ansprüche 1 bis 6, **gekennzeichnet**
**dadurch, dass** der Außenumfang der Propellerwelle (1) eine zweite Laufbuchse (15) an der Wellendichtungsanordnung (7) aufweist.

8. Anordnung nach einem der Ansprüche 1 bis 7, **gekennzeichnet**
**dadurch, dass** das in der ersten Schmiermittelumwälzleitung (5) strömende erste Schmiermittel daran gehindert wird, sich mit dem in der zweiten Schmiermittelumwälzleitung (9) strömenden zweiten Schmiermittel im ersten Wärmetauscher (11) zu vermischen.

9. Anordnung nach einem der Ansprüche 1 bis 8, **gekennzeichnet**
**dadurch, dass** das in der ersten Schmiermittelumwälzleitung (5) strömende erste Schmiermittel daran gehindert wird, in die zweite Schmiermittelumwälzleitung (9) im ersten Wärmetauscher (11) einzuströmen.

10. Anordnung nach einem der Ansprüche 1 bis 9, **gekennzeichnet**
**dadurch, dass** das in der zweiten Schmiermittelumwälzleitung (9) strömende zweite Schmiermittel daran gehindert wird, in die erste Schmiermittelumwälzleitung (5) im ersten Wärmetauscher (11) einzuströmen.

11. Anordnung nach einem der Ansprüche 1 bis 10, **gekennzeichnet**
**dadurch, dass** es sich beim ersten Schmiermittel um ein Schmiermittel handelt, das eine Zusammensetzung aufweist, die sich von der Zusammensetzung des zweiten Schmiermittels unterscheidet.

12. Anordnung nach einem der Ansprüche 1 bis 11, **gekennzeichnet**
**durch** einen zweiten Wärmetauscher (16) in thermischem Kontakt mit der ersten Schmiermittelumwälzleitung (5), wobei der zweite Wärmetauscher (16) dazu ausgelegt ist, thermische Energie von dem in der ersten Schmiermittelumwälzleitung (5) strömenden ersten Schmiermittel abzuführen, wobei der zweite Wärmetauscher (16) ausgehend von der ersten Schmiermittelumwälzleitung (5) vorgesehen ist.

13. Verfahren zum Abdichten einer Propellerwelle (1) eines Wasserfahrzeugs mit einer Dichtungsanordnung, umfassend
mindestens ein Lager (2) zum drehbaren Lagern der Propellerwelle (1),
eine an das mindestens eine Lager (2) angrenzende Lageranordnung (3),
eine erste Schmieranordnung (4) umfassend eine erste Schmiermittelumwälzleitung (5) zum Führen eines ersten Schmiermittels hin zur Lageranordnung (3) und zum Führen des ersten Schmiermittels weg von der Lageranordnung (3), eine erste Schmiermittelumwälzvorrichtung (6), die dazu ausgelegt ist, einen Strom von erstem Schmiermittel in der ersten Schmiermittelumwälzleitung und in der Lageranordnung (3) zu erzeugen,
eine Wellendichtungsanordnung (7) zum Abdichten der Propellerwelle (1) gegen Meerwasser, und
eine zweite Schmieranordnung (8) umfassend eine zweite Schmiermittelumwälzleitung (9) zum Führen eines zweiten Schmiermittels hin zur Wellendichtungsanordnung (7) und zum Führen des zweiten Schmiermittels weg von der Wellendichtungsanordnung (7), eine zweite Schmiermittelumwälzvorrichtung (10), die dazu ausgelegt ist, einen Strom von zweitem Schmiermittel in der zweiten Schmiermittelumwälzleitung (9) und in der Wellendichtungsanordnung (7) zu erzeugen,
**gekennzeichnet**
**durch** Bereitstellen eines ersten Wärmetauschers (11) in thermischem Kontakt mit der ersten Schmiermittelumwälzleitung (5) und in thermischem Kontakt mit der zweiten Schmiermittelumwälzleitung (9), und
**durch** Übertragen von thermischer Energie zwischen dem in der ersten Schmiermittelumwälzleitung (5) strömenden ersten Schmiermittel und dem in der zweiten Schmiermittelumwälzleitung (9) strömenden zweiten Schmiermittel mittels des ersten Wärmetauschers (11).

14. Verfahren nach Anspruch 13, **gekennzeichnet**
**durch** Verhindern einer Vermischung des in der ersten Schmiermittelumwälzleitung (5) strömenden ersten Schmiermittels mit dem in der zweiten Schmiermittelumwälzleitung (9) strömenden zweiten Schmiermittel im ersten Wärmetauscher (11).

15. Verfahren nach Anspruch 13 oder 14, **gekennzeichnet**
**durch** Verhindern, dass das in der ersten Schmiermittelumwälzleitung (5) strömende erste Schmiermittel in die zweite Schmiermittelumwälzleitung (9) im ersten Wärmetauscher (11) einströmt.

16. Verfahren nach einem der Ansprüche 13 bis 15, **gekennzeichnet**
**durch** Verhindern, dass das in der zweiten Schmiermittelumwälzleitung (9) strömende zweite Schmiermittel in die erste Schmiermittelumwälzleitung (5) im ersten Wärmetauscher (11) einströmt.

17. Verfahren nach einem der Ansprüche 13 bis 16, **gekennzeichnet**
**dadurch, dass** als erstes Schmiermittel ein Schmiermittel verwendet wird, das eine Zusammensetzung aufweist, die sich von der Zusammensetzung des zweiten Schmiermittels unterscheidet.

18. Verfahren nach einem der Ansprüche 13 bis 17, **gekennzeichnet**
**durch** Bereitstellen eines zweiten Wärmetauschers (16) in thermischem Kontakt mit der ersten Schmiermittelumwälzleitung (5), wobei der zweite Wärmetauscher (16) ausgehend von der ersten Schmiermittelumwälzleitung (5) vorgesehen wird, und
**durch** Abführen von thermischer Energie von dem in der ersten Schmiermittelumwälzleitung (5) strömenden ersten Schmiermittel mittels des zweiten Wärmetauschers (16).

## Revendications

1. Agencement pour étancher un arbre d'hélice (1) d'un navire marin, ledit agencement comprenant :
un arbre d'hélice (1) supporté de manière rotative par au moins un palier (2),
un ensemble de palier (3) adjacent audit au moins un palier (2),
un premier ensemble de lubrification (4) comprenant une première ligne de circulation de lubrifiant (5) pour acheminer un premier lubrifiant vers ledit ensemble de palier (3) et pour acheminer le premier lubrifiant hors dudit ensemble de palier (3), et un premier circulateur de lubrifiant (6) configuré pour créer un flux de premier lubrifiant dans la première ligne de circulation de lubrifiant et dans ledit ensemble de palier (3),
un ensemble d'étanchéité d'arbre (7) pour assurer l'étanchéité de l'arbre d'hélice (1) à l'eau de mer, et
un deuxième ensemble de lubrification (8) comprenant une deuxième ligne de circulation de lubrifiant (9) pour acheminer un deuxième lubrifiant vers ledit ensemble d'étanchéité d'arbre (7) et pour acheminer le deuxième lubrifiant hors dudit ensemble d'étanchéité d'arbre (7), et un deuxième circulateur de lubrifiant (10) configuré pour créer un flux de deuxième lubrifiant dans la deuxième ligne de circulation de lubrifiant (9) et dans ledit ensemble d'étanchéité d'arbre (7),
**caractérisé**
**par** un premier échangeur de chaleur (11) en contact thermique avec la première ligne de circulation de lubrifiant (5) et en contact thermique avec la deuxième ligne de circulation de lubrifiant (9) pour transférer l'énergie thermique entre le premier lubrifiant circulant dans la première ligne de circulation de lubrifiant (5) et le deuxième lubrifiant circulant dans la deuxième ligne de circulation de lubrifiant (9).

2. Agencement selon la revendication 1, **caractérisé**
**en ce que** le premier circulateur de lubrifiant (6) est une première pompe.

3. Agencement selon la revendication 1 ou 2, **caractérisé**
**en ce que** la circonférence extérieure de l'arbre d'hélice (1) comporte une première boîte de glissement (14) au droit de l'ensemble de palier (3).

4. Agencement selon l'une des revendications 1 à 3, **caractérisé**
**en ce que** le ensemble d'étanchéité d'arbre (7) comprend une pluralité de bagues d'étanchéité (12) espacées axialement les uns des autres et engagées dans la circonférence extérieure de l'arbre d'hélice (1) de telle sorte qu'au moins une chambre d'étanchéité de lubrifiant (13) est délimitée entre des bagues d'étanchéité adjacentes (12) et la circonférence extérieure de l'arbre d'hélice (1),
**en ce que** la deuxième ligne de circulation de lubrifiant (9) pour acheminer le deuxième lubrifiant vers ledit ensemble d'étanchéité d'arbre (7) et pour acheminer le deuxième lubrifiant hors dudit ensemble d'étanchéité d'arbre (7) est configurée pour acheminer le deuxième lubrifiant vers ladite au moins une chambre d'étanchéité de lubrifiant (13) et configurée pour acheminer le deuxième lubrifiant hors de ladite au moins une chambre d'étanchéité de lubrifiant (13), et
**en ce que** le deuxième circulateur de lubrifiant (10) configuré pour créer un flux de deuxième lubrifiant dans la deuxième ligne de circulation de lubrifiant (9) et dans ledit ensemble d'étanchéité d'arbre (7) est configuré pour créer un flux de deuxième lubrifiant dans la deuxième ligne de circulation de lubrifiant (9) et dans ladite au moins une chambre d'étanchéité de lubrifiant (13).

5. Agencement selon la revendication 4, **caractérisé**
**en ce qu'**au moins l'une des bagues d'étanchéité (12) comprend de deuxièmes lèvres d'étanchéité.

6. Agencement selon l'une des revendications 1 à 5, **caractérisé**
**en ce que** le deuxième circulateur de lubrifiant (10) est une deuxième pompe.

7. Agencement selon l'une des revendications 1 à 6, **caractérisé**
**en ce que** la circonférence extérieure de l'arbre d'hélice (1) comporte une deuxième boîte de glissement (15) au droit du ensemble d'étanchéité d'arbre (7).

8. Agencement selon l'une des revendications 1 à 7, **caractérisé**
**en ce que** le premier lubrifiant circulant dans la première ligne de circulation de lubrifiant (5) est empêché de se mélanger avec le deuxième lubrifiant circulant dans la deuxième ligne de circulation de lubrifiant (9) dans le premier échangeur de chaleur (11).

9. Agencement selon l'une des revendications 1 à 8, **caractérisé**
**en ce que** le premier lubrifiant circulant dans la première ligne de circulation de lubrifiant (5) est empêché de s'introduire dans la deuxième ligne de circulation de lubrifiant (9) dans le premier échangeur de chaleur (11).

10. Agencement selon l'une des revendications 1 à 9, **caractérisé**
**en ce que** le deuxième lubrifiant circulant dans la deuxième ligne de circulation de lubrifiant (9) est empêché de s'introduire dans la première ligne de circulation de lubrifiant (5) dans le premier échangeur de chaleur (11).

11. Agencement selon l'une des revendications 1 à 10, **caractérisé**
**en ce que** le premier lubrifiant est un lubrifiant qui a une composition qui est différente de celle du deuxième lubrifiant.

12. Agencement selon l'une des revendications 1 à 11, **caractérisé**
**par** un deuxième échangeur de chaleur (16) en contact thermique avec la première ligne de circulation de lubrifiant (5), dans lequel le deuxième échangeur de chaleur (16) est configuré pour transférer de l'énergie thermique venant du premier lubrifiant circulant dans la première ligne de circulation de lubrifiant (5), dans lequel le deuxième échangeur de chaleur (16) est prévu à partir de la première ligne de circulation de lubrifiant (5).

13. Procédé pour étancher un arbre d'hélice (1) d'un navire marin avec un ensemble d'étanchéité comprenant
au moins un palier (2) pour supporter de manière rotative l'arbre d'hélice (1),
un ensemble de palier (3) adjacent audit au moins un palier (2),
un premier ensemble de lubrification (4) comprenant une première ligne de circulation de lubrifiant (5) pour acheminer un premier lubrifiant vers ledit ensemble de palier (3) et pour acheminer le premier lubrifiant hors dudit ensemble de palier (3), un premier circulateur de lubrifiant (6) configuré pour créer un flux de premier lubrifiant dans la première ligne de circulation de lubrifiant et dans ledit ensemble de palier (3),
un ensemble d'étanchéité d'arbre (7) pour assurer l'étanchéité de l'arbre d'hélice (1) à l'eau de mer, et
un deuxième ensemble de lubrification (8) comprenant une deuxième ligne de circulation de lubrifiant (9) pour acheminer un deuxième lubrifiant vers ledit ensemble d'étanchéité d'arbre (7) et pour acheminer le deuxième lubrifiant hors dudit ensemble d'étanchéité d'arbre (7), un deuxième circulateur de lubrifiant (10) configuré pour créer un flux de deuxième lubrifiant dans la deuxième ligne de circulation de lubrifiant (9) et dans ledit ensemble d'étanchéité d'arbre (7),
**caractérisé par** les étapes consistant à
fournir un premier échangeur de chaleur (11) en contact thermique avec la première ligne de circulation de lubrifiant (5) et en contact thermique avec la deuxième ligne de circulation de lubrifiant (9), et
transférer de l'énergie thermique entre le premier lubrifiant circulant dans la première ligne de circulation de lubrifiant (5) et le deuxième lubrifiant circulant dans la deuxième ligne de circulation de lubrifiant (9) moyennant le premier échangeur de chaleur (11).

14. Procédé selon la revendication 13, **caractérisé par** l'étape consistant à empêcher le premier lubrifiant circulant dans la première ligne de circulation de lubrifiant (5) de se mélanger avec le deuxième lubrifiant circulant dans la deuxième ligne de circulation de lubrifiant (9) dans le premier échangeur de chaleur (11).

15. Procédé selon la revendication 13 ou 14, **caractérisé par** l'étape consistant à empêcher le premier lubrifiant circulant dans la première ligne de circulation de lubrifiant (5) de s'introduire dans la deuxième ligne de circulation de lubrifiant (9) dans le premier échangeur de chaleur (11).

16. Procédé selon l'une des revendications 13 à 15, **caractérisé par** l'étape consistant à
empêcher le deuxième lubrifiant circulant dans la deuxième ligne de circulation de lubrifiant (9) de s'introduire dans la première ligne de circulation de lubrifiant (5) dans le premier échangeur de chaleur (11).

17. Procédé selon l'une des revendications 13 à 16, **caractérisé par** l'étape consistant à
utiliser comme premier lubrifiant un lubrifiant qui a une composition qui est différente de celle du deuxième lubrifiant.

18. Procédé selon l'une des revendications 13 à 17, **caractérisé par** les étapes consistant à
fournir un deuxième échangeur de chaleur (16) en contact thermique avec la première ligne de circulation de lubrifiant (5), dans lequel le deuxième échangeur de chaleur (16) est prévu à partir de la première ligne de circulation de lubrifiant (5), et
transférer de l'énergie thermique du premier lubrifiant circulant dans la première ligne de circulation de lubrifiant (5) moyennant le deuxième échangeur de chaleur (16).
